# EUROPÄISCHE PATENTSCHRIFT

(11) **EP 2 853 643 B1**
(45) Veröffentlichungstag und Bekanntmachung des Hinweises auf die Patenterteilung: **02.09.2020**
(21) Anmeldenummer: 14003118.8
(22) Anmeldetag: 09.09.2014
(51) Int. Cl.: E03C 1/02, F16B 9/02, F16L 3/08, F16L 5/06

(54) **Anschlusskörpersystem für eine sanitäre Unterputzarmatur**
Connecting body system for a concealed mounted sanitary fixture
Système de corps de raccordement pour une robinetterie encastrée

(30) Priorität: 27.09.2013 DE 102013016103
(43) Veröffentlichungstag der Anmeldung: 01.04.2015
(73) Patentinhaber: Hansa Armaturen GmbH, 70567 Stuttgart (DE)
(72) Erfinder: ASSENMACHER, Bernd, 70597 Stuttgart (DE)
(74) Vertreter: Ostertag & Partner Patentanwälte mbB

(56) Entgegenhaltungen:
- EP-A1- 0 392 176
- EP-A1- 2 143 846
- US-B1- 6 443 497

## Beschreibung

Die Erfindung betrifft ein Anschlusskörpersystem für eine sanitäre Unterputzarmatur nach dem Oberbegriff des Patentanspruchs 1.

In den letzten Jahren finden zunehmend sanitäre Unterputzarmaturen Verwendung, bei welchen der Bauherr seine Entscheidung, welche genaue Art sanitärer Unterputzarmatur er wünscht, bis in die letzte Phase des Innenausbaus eines Gebäudes aufschieben kann. Zunächst wird in eine Einbauöffnung der Gebäudewand, beispielsweise eine Mauernische, nur ein universell verwendbarer Anschlusskörper eingebaut, der mit den in der Gebäudewand verlegten Wasserleitungen, insbesondere also der Kaltwasser-Hausleitung, der Warmwasser-Hausleitung und ggf. Mischwasser abführenden Leitungen, verbunden wird. Die so bestückte Mauernische wird dann abgedeckt, bis der Innenausbau des Gebäudes weitgehend abgeschlossen ist. Erst dann wird die Abdeckung der Mauernische wieder abgenommen. Jetzt entscheidet der Bauherr, welche spezielle Art von Unterputzarmatur er wünscht, beispielsweise einen Einhebelmisher, ein Thermostatventil oder dergleichen. Vom Hersteller der Unterputzarmatur wird ein ganzer Satz von Funktionseinheiten bereitgehalten, die so standardisiert sind, dass sie alle mit demselben Anschlusskörper verbunden werden können, jedoch unterschiedliche sanitäre Ventile enthalten. Die spezielle, vom Bauherrn gewünschte Funktionseinheit wird dann mit dem Anschlusskörper verbunden; abschließend brauchen nur noch die die Mauernische abdeckende Rosette sowie die Bedienungselemente angebracht zu werden.

Die Tiefe der Mauernische und die Tiefe, in welcher die Hausleitungen in der Wand verlegt werden, variieren in der Praxis. Deshalb ist aus der EP 1 382 757 A1 ein Anschlusskörpersystem ähnlich dem der eingangs genannten Art bekannt, bei welchem ein Befestigungsring, der zum Anschrauben des Anschlusskörpers an der Montagewand dient, in unterschiedlichen Positionen an der äußeren Mantelfläche des Anschlusskörpers arretiert werden kann. In der EP 1 382 757 A1 sind verschiedene Arretierungsformen beschrieben. In allen Fällen findet jedoch ein in sich geschlossener Ring aus starrem Material Verwendung. Dieser Ring muss immer in irgendeiner Weise in axialer Richtung über den Anschlusskörper bewegt werden, was die Montage insbesondere unter ungünstigen räumlichen Verhältnissen erschweren kann.

Ein ähnliches Anschlusskörpersystem ist in der DE 10 2004 040 084 B4 beschrieben.

Das aus der EP 2 143 846 A1 bekannte Anschlusskörpersystem versucht, die Montage des Befestigungsringes am Anschlusskörper dadurch zu erleichtern, dass der Befestigungsring aus zwei Teilen besteht, die in sich starr sind und von der Seite her auf den Anschlusskörper aufgeschoben werden können und sodann durch gesonderte Befestigungsmittel an den beiden Unterbrechungsstellen in der Schließstellung zusammengehalten werden. Diese Befestigungsmittel sind im Wesentlichen als Zungen oder Laschen ausgebildet, welche sich in Rastöffnungen des jeweils anderen Teiles hinein erstrecken. Bei dieser Bauweise ist tatsächlich die Montage etwas vereinfacht. Allerdings besteht diesbezüglich weiterhin Verbesserungsbedarf. Zudem ist die Art der Verbindung zwischen den beiden Teilen des Befestigungsringes für eine axiale Belastung weniger geeignet.
Aus der US 6 443 497 B1 ist eine Vorrichtung bekannt geworden, mittels welcher eine Wasserarmatur am freien Ende einer abgewinkelten, hinter einer Wand verlegten Leitung befestigbar ist. Die Vorrichtung umfasst einen Gewindering, welcher eine Unterbrechungsstelle haben und aufweitbar sein kann, so dass er von der Seite auf die Leitung aufschiebbar ist.
Aufgabe der vorliegenden Erfindung ist es daher, ein Anschlusskörpersystem der eingangs genannten Art zu schaffen, das kostengünstig herzustellen, sehr einfach zu montieren und insbesondere auch an der Unterbrechungsstelle axialen Belastungen gut gewachsen ist. Diese Aufgabe wird erfindungsgemäß durch ein Anschlusskörpersystem mit den im Patentanspruch 1 angegebenen Merkmalen gelöst.

Bei der Erfindung findet also, wie im Stand der Technik an sich bekannt, ein einstückiger Befestigungsring Verwendung, der allerdings aus einem Material verhältnismäßig hoher Elastizität und Flexibilität besteht. Dieser Befestigungsring ist an einer einzigen Unterbrechungsstelle öffenbar und lässt sich aufgrund seiner Elastizität so weit aufweiten, dass er in die gewünschte Lage an der Außenumfangswand des Anschlusskörpers gebracht werden kann, wo er sich dann wieder schließt.
Durch die beiden in ihrer Dicke reduzierten Endbereiche, die in der Schließstellung übereinander bzw. nebeneinander liegen und so im Bereich der Unterbrechungsstelle wieder ausreichend Materialdicke bereitstellen, ist der Befestigungsring auch an der Unterbrechungsstelle in axialer Richtung gut belastbar. Durch die Einstückigkeit des Befestigungsringes lässt sich die Zahl der Einzelkomponenten und die Zahl der Montageschritte gegenüber der Anordnung, die in der EP 2 143 846 A1 beschrieben ist, reduzieren.

Erfindungsgemäß weist jeder Endbereich einen Befestigungszapfen und ein Loch auf, wobei in geschlossenem Zustand des Befestigungsrings der Befestigungszapfen des einen Endbereichs jeweils in das Loch des anderen Endbereichs eingreift. Auf diese Weise wird ein ungewolltes Öffnen des Befestigungsringes zuverlässig verhindert.

Die Arretierungsmittel, mit welchen der Befestigungsring am Anschlusskörper festgelegt wird, können in bekannter Weise mehrere in parallelen, in Abstand voneinander angeordneten Ebenen angeordnete rippenartige Vorsprünge an dem Anschlusskörper und mehrere die rippenartigen Vorsprünge des Armaturenkörpers umgreifende rippenartige Vorsprünge an der Innenmantelfläche des Befestigungsringes umfassen. Da, wie erwähnt, rippenartige Vorsprünge an der Außenmantelfläche des Armaturenkörpers bekannt sind, wie die drei eingangs genannten Druckschriften ausweisen, kann ein erfindungsgemäßer Befestigungsring auch an im übrigen herkömmlichen Anschlusskörpern verwendet werden.

Besonders zweckmäßig ist schließlich, wenn der Abstand zwischen in unterschiedlichen Ebenen angeordneten rippenartigen Vorsprüngen des Anschlusskörpers der Höhe des Befestigungsringes entspricht. Dann ist nicht nur diejenige Arretierungsart möglich, bei welcher die rippenartigen Vorsprünge des Befestigungsringes die rippenartigen Vorsprünge des Anschlusskörpers umfassen, sondern auch eine Arretierungsart, bei welcher der gesamte Befestigungsring zwischen rippenartigen Vorsprüngen des Anschlusskörpers liegt.

Ein Ausführungsbeispiel der Erfindung wird nachfolgend anhand der Zeichnung näher erläutert; es zeigen
- Figur 1: die Seitenansicht eines Anschlusskörpers für eine Unterputz-Sanitärarmatur mit einem Befestigungsring für eine Montage in einer Wand-Einbauöffnung;

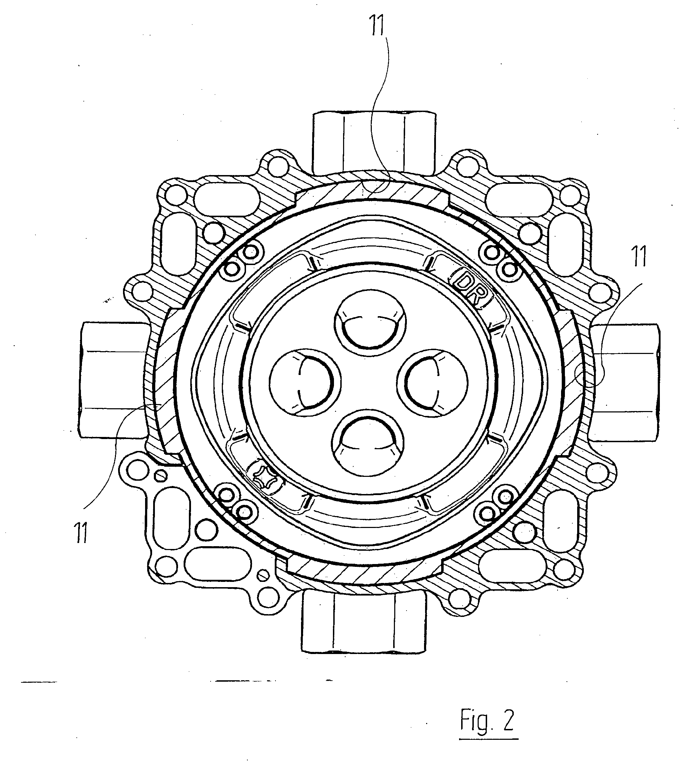

- Figur 2: einen Schnitt gemäß Linie II-II von Figur 1;
- Figur 3: eine Draufsicht auf den Befestigungsring, der bei dem Anschlusskörper der Figuren 1 und 2 Verwendung findet, in geöffnetem Zustand;
- Figur 4: eine Draufsicht auf den Befestigungsring der

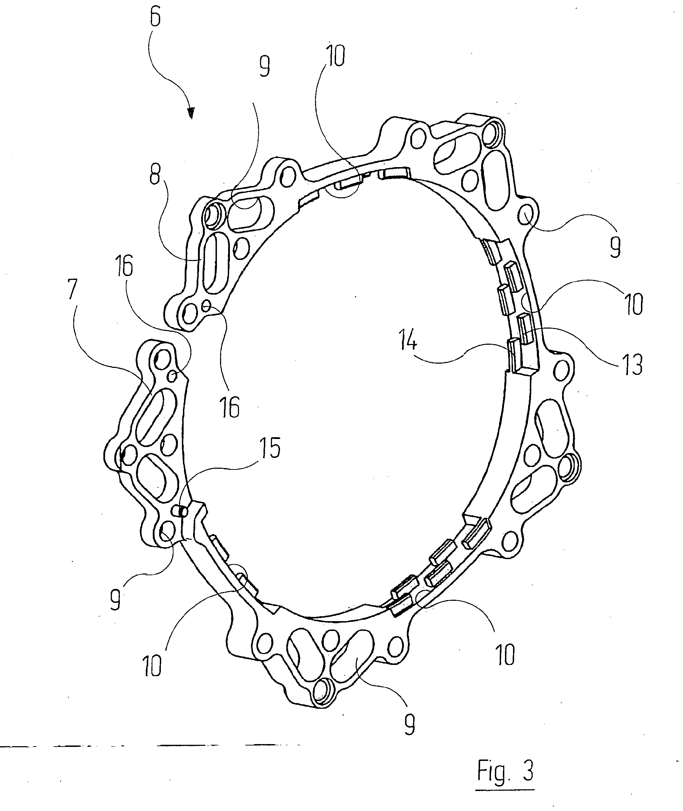

- Figur 3,: jedoch in geschlossenem Zustand.

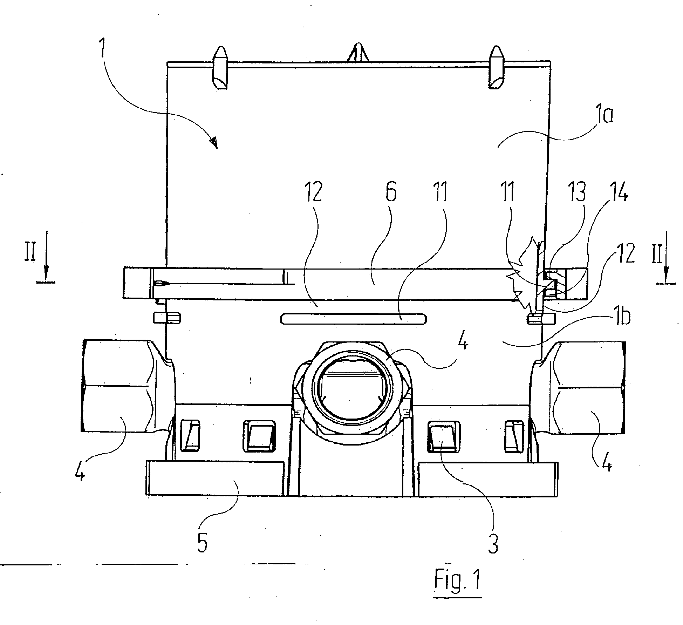

In Figur 1 ist ein Anschlusskörper für eine Unterputz-Sanitärarmatur insgesamt mit dem Bezugszeichen 1 gekennzeichnet. An den Anschlusskörper 1 kann in an sich bekannter Weise eine nicht dargestellte Funktionseinheit, beispielsweise ein Einhebelmischer, eine Thermostatbatterie oder eine Zweigriffarmatur angeschlossen und mit einer üblichen, nicht dargestellten Verbindungseinrichtung befestigt werden.

Der Anschlusskörper 1 weist im Wesentlichen die Form eines Hohlzylinders auf, der in Figur 1 oben offen und unten geschlossen ist. Im dargestellten Ausführungsbeispiel ist der Anschlusskörper 1 aus einem oberen Teil la, welches im Wesentlichen die Rohrform bildet, und einem unteren, axial kürzeren tassenähnlichen Teil lb zusammengesetzt. Die Verbindung der beiden Teile la und lb des Anschlusskörpers 1 erfolgt über Rastmittel 3. Die Mehrteiligkeit des Anschlusskörpers 1 ist aber im vorliegenden Zusammenhang ohne Interesse.

Im Bereich des unteren Teiles lb des Anschlusskörpers sind vier Anschlussstutzen 4 radial in den Anschlusskörper 1 eingeführt. Im dargestellten Ausführungsbeispiel handelt es sich um gesonderte Teile; alternativ können die Anschlussstutzen 4 auch einstückige Bestandteile des Anschlusskörpers 1 sein. Sie sind in an sich bekannter Weise mit in der Montagewand verlegten, nicht dargestellten Wasserrohren verbindbar.

Im Inneren des Anschlusskörpers 1 sind ähnlich, wie dies in der oben erwähnten DE 10 2004 040 084 B4 beschrieben ist, vier den Anschlussstutzen 4 jeweils zugeordnete Anschlussöffnungen vorgesehen, an denen die jeweilige Funktionseinheit in an sich bekannter Weise wassermäßig mit dem Anschlusskörper 1 verbindbar ist.

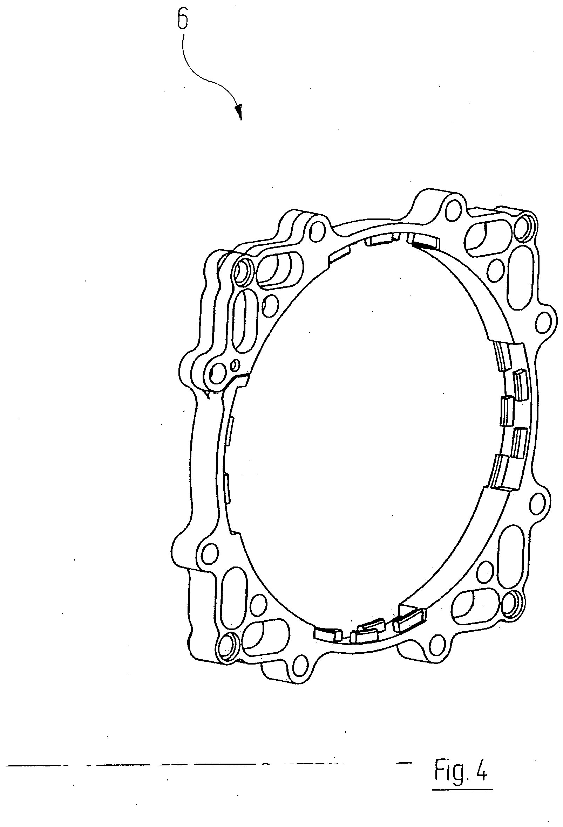

Um den Anschlusskörper 1 in der Wand in einer einem üblichen Standard entsprechenden Einbautiefe befestigen zu können, weist der Anschlusskörper 1 unterhalb der Anschlussstutzen 4 einen Befestigungskragen 5 auf, der jeweils im Bereich der Anschlussstutzen 4 unterbrochen ist. Der Befestigungskragen 5 ragt radial über die Außenmantelfläche des Anschlusskörpers 1 hinaus. Wie in Figur 4 der DE 10 2004 040 084 B4 dargestellt, sind in dem überstehenden Bereich des Befestigungskragens 5 Befestigungsbohrungen vorgesehen, durch welche zur Montage des Anschlusskörpers 1 an der Wand Schrauben hindurchgeführt werden können.

Im oberen Teil la des Anschlusskörpers 1 ist ein Befestigungsring 6 vorgesehen, der in nachfolgend näher erläuterter Weise in unterschiedlichen axialen Positionen an der Mantelfläche des Anschlusskörpers 1 festgelegt werden kann. Zur näheren Beschreibung des Befestigungsringes 6 wird nunmehr auf die Figuren 3 und 4 Bezug genommen.

Wie insbesondere der Figur 3 zu entnehmen ist, handelt es sich bei dem Befestigungsring 6 um einen von Haus aus offenen Ring mit zwei benachbarten Endbereichen 7, 8 an einer Unterbrechungsstelle. Die Außenkontur des Befestigungsringes 6 entspricht grob einem Quadrat, während die Innenkontur an die Außenkontur des oberen Teiles la des Anschlusskörpers 1 angepasst ist, im vorliegenden Falle grob kreisförmig ist.

Der Befestigungsring 6 ist von einer Vielzahl von Durchgangsbohrungen 9 durchzogen, die in unterschiedlichsten Lagen und auch Formen insbesondere im Bereich der "Ecken" des Befestigungsringes 6 vorgesehen sind. All diese Durchgangsbohrungen 9 bieten dem Monteur der sanitären Unterputzarmatur die Möglichkeit, bei der Befestigung des Anschlusskörpers 1 an der Wand an geeigneten Stellen Schrauben hindurchzuführen.

An der Innenmantelfläche des Befestigungsringes 6 sind vier Rücksprünge 10 jeweils im Winkelabstand von 90° eingeformt. Die Bogenlänge und die Tiefe dieser Rücksprünge 10 entspricht der Bogenlänge von Vorsprüngen 11, die an der Außenmantelfläche des oberen Teiles la des Anschlusskörpers 1 vorgesehen sind. Bei diesen Vorsprüngen 11 handelt es sich um rippenartige Gebilde, die in axialem Abstand voneinander und parallel zueinander angeordnet sind und jeweils über eine gewisse Bogenlänge verlaufen. Zwischen diesen Rippen 11 befinden sich nutartige Vertiefungen 12.

Am Grund der Vertiefungen 10 des Befestigungsringes 6 ist ein erster Satz aus mehreren, radial nach innen ragende rippenartigen Vorsprüngen 13, und, parallel zu diesen in einer axial versetzten Ebene liegend, ein zweiter Satz ähnlicher rippenartiger Vorsprünge 14 vorgesehen. Der axiale Abstand zwischen den beiden Sätzen rippenartiger Vorsprünge 13 und 14 entspricht dabei etwa der Breite der rippenartigen Vorsprünge 11 an der Außenmantelfläche des Anschlusskörpers 1.

Die beiden Anschlussbereiche 7, 8 des Befestigungsringes 1 besitzen jeweils nur die halbe Höhe des Befestigungsringes 1 in den übrigen Bereichen. Die Anordnung ist dabei so, dass in Figur 3 der linke Befestigungsbereich 7 mit seiner vom Betrachter abgewandten Seite mit der vom Betrachter abgewandten Seite des übrigen Befestigungsringes 6 fluchtet, während der in Figur 3 rechte Endbereich 8 mit seiner dem Betrachter zugewandten Seite mit der dem Betrachter zugewandten Seite des übrigen Befestigungsringes 6 fluchtet. Es ergibt sich auf diese Weise eine Anordnung, bei der die beiden Befestigungsbereiche 7, 8 übereinander gelegt werden können, wie dies in Figur 4 gezeigt ist, wobei sich ein geschlossener Ring bildet. Selbstverständlich müssen die Durchgangslöcher 9, 10 in den Befestigungsbereichen 7, 8 so angeordnet und ausgestaltet sein, dass sie beim Schließen des Befestigungsringes 6 fluchten, wie in Figur 4 dargestellt.

Beide Befestigungsbereiche 7, 8 weisen auf den inneren Flächen, mit denen sie einander zugewandt sind, jeweils einen vorstehenden Zapfen 15 auf. Dieser Zapfen 15 kann bei geschlossenem Befestigungsring 6 (vgl. Figur 4) in ein komplementäres Loch 16 am jeweils anderen Endbereich 7 bzw. 8 eingeführt werden. Auf diese Weise wird der von Haus aus offene Befestigungsring 6 in seiner Schließstellung verriegelt.

Der Befestigungsring 6 besteht aus einem Kunststoff mit ausreichender Flexibilität, so dass er in folgender Weise an dem Anschlusskörper 1 in der richtigen axialen Position montiert werden kann:
Der zunächst offene Befestigungsring 6 wird so weit aufgeweitet, dass er von der Seite her über das obere Teil la des Anschlusskörpers 1 geschoben werden kann, und zwar in der richtigen axialen Höhe. Die Befestigungsbereiche 7, 8 werden nunmehr unter Schließen des Befestigungsringes 6 übereinander geführt, wobei sich die Innenmantelfläche des Befestigungsringes 6 an die Außenmantelfläche des Anschlusskörpers 1 anlegt. Dabei ist selbstverständlich auf die richtige Winkelorientierung zu achten, bei welcher die rippenartigen Vorsprünge 11 des Anschlusskörpers 1 in die Rücksprünge 10 des Befestigungsringes 6 eindringen können. Diese rippenartigen Vorsprünge 11 werden nunmehr von den Zwischenräumen zwischen den Sätzen rippenartiger Vorsprünge 13, 14 aufgenommen, wie dies insbesondere auch der Figur 1 zu entnehmen ist. Die Endbereiche 7, 8 des Befestigungsringes 6 sind dabei zunächst etwas aus ihrer Ruheposition ausgebogen, bis sie die voll geschlossene Position erreicht haben, in denen die Zapfen 15 in die Löcher 16 des jeweils benachbarten Endbereiches 7, 8 eindringen.

Sodann kann der Anschlusskörper 1 in bekannter Weise mit Hilfe von Schrauben, welche die Durchgangsbohrungen 9 des Befestigungsringes 6 durchziehen, an der Montagewand befestigt werden. Hilfreich ist es dabei, wenn zumindest eine der Befestigungsschrauben durch die überlappenden Endbereiche 7, 8 des Befestigungsringes 16 durchgeführt werden, wodurch die Verbindung dieser Endbereiche verstärkt wird.

Der Befestigungsring 6 braucht nicht unbedingt, wie oben beschrieben, so angebracht zu werden, dass seine rippenartigen Vorsprünge 13, 14 einen rippenartigen Vorsprung 11 des Anschlusskörpers 1 umschließen. Der Befestigungsring 6 kann auch insgesamt zwischen zwei rippenartigen Vorsprüngen 11 positioniert werden. Dies bedeutet, dass die axiale Höhe der nutartigen Vertiefung 12 zwischen benachbarten Rippen 11 etwa der axialen Höhe des Befestigungsringes 6 entspricht. Auf diese Weise lässt sich die Anzahl der Befestigungsmöglichkeiten erhöhen. Liegen beispielsweise vier Ebenen von axialen Vorsprüngen 11 des Anschlusskörpers 1 vor, so sind vier mögliche Befestigugspositionen des Befestigungsringes 6 auf den entsprechenden axialen Vorsprüngen 11 und drei weitere Befestigungsmöglichkeiten zwischen diesen Vorsprüngen 11 möglich.

## Patentansprüche

1. Anschlusskörpersystem für eine sanitäre Unterputzarmatur das einen Anschlusskörper (1) mit mindestens einem Anschluss (4) für eine Wasserleitung und einen Befestigungsring (6) umfasst,
a) wobei das Anschlusskörpersystem eine verstellbare Befestigungseinrichtung umfasst, mit welcher der Anschlusskörper (1) in unterschiedlichen Einbautiefen befestigbar ist und die umfasst:
aa) den in unterschiedlichen Positionen an dem Anschlusskörper (1) festlegbaren Befestigungsring (6);
ab) wenigstens ein Arretierungsmittel (11 bis 14) zum Arretieren des Befestigungsringes (6) an dem Anschlusskörper (1);
wobei
b) der Befestigungsring (6) aus elastisch-flexiblem Material hergestellt ist;
c) der Befestigungsring (6) an einer Unterbrechungsstelle öffenbar und elastisch so aufweitbar ist, dass er von der Seite her auf den Anschlusskörper (1) aufschiebbar ist;
d) der Befestigungsring (6) an seiner Unterbrechungsstelle zwei Endbereiche (7, 8) reduzierte Dicke aufweist, die zum Schließen des Befestigungsrings (6) übereinandergeführt und aneinander fixiert werden können;
**dadurch gekennzeichnet, dass**
e) jeder Endbereich (7, 8) einen Befestigungszapfen (15) und ein Loch (16) aufweist, wobei in geschlossenem Zustand des Befestigungsrings (6) der Befestigungszapfen (15) des einen Endbereichs (7, 8) jeweils in das Loch (16) des anderen Endbereichs (8, 7) eingreift.

2. Anschlusskörpersystem nach Anspruch 1, **dadurch gekennzeichnet, dass** die Arretierungsmittel mehrere in parallelen, in Abstand zueinander angeordneten Ebenen angeordnete rippenartige Vorsprünge (11) an dem Anschlusskörper (1) und mehrere die rippenartigen Vorsprünge (11) des Armaturenkörpers (1) umgreifende rippenartige Vorsprünge (13, 14) an der Innenmantelfläche des Befestigungsrings (6) umfassen.

3. Anschlusskörpersystem nach Anspruch 2, **dadurch gekennzeichnet, dass** der Abstand zwischen in unterschiedlichen Ebenen angeordneten rippenartigen Vorsprüngen (11) des Anschlusskörpers (1) der Höhe des Befestigungsringes (6) entspricht.

## Claims

1. Connection-body system which is intended for a sanitary flush-mounted fitting and comprises a connection body (1) having at least one connection (4) for a water line and also a fastening ring (6),
a) wherein the connection-body system comprises an adjustable fastening device, by means of which the connection body (1) can be fastened at different installation depths and which comprises:
aa) the fastening ring (6), which can be secured in different positions on the connection body (1) ;
ab) at least one arresting means (11 to 14) for arresting the fastening ring (6) on the connection body (1);
wherein
b) the fastening ring (6) is produced from elastic/flexible material;
c) the fastening ring (6) can be opened at an interruption location and can be widened elastically such that it can be pushed onto the connection body (1) from the side;
d) at its interruption location, the fastening ring (6) has two end regions (7, 8) with reduced width which can be guided over one another, and fixed on one another, for the purpose of closing the fastening ring (6);
**characterized in that**
e) each end region (7, 8) has a fastening peg (15) and a hole (16), wherein, in the closed state of the fastening ring (6), the fastening peg (15) of the one end region (7, 8) engages in each case in the hole (16) of the other end region (8, 7).

2. Connection-body system according to Claim 1, **characterized in that** the arresting means comprise a plurality of rib-like protrusions (11) from the connection body (1), said rib-like protrusions being arranged in parallel, spaced-apart planes, and a plurality of rib-like protrusions (13, 14) on the inner lateral surface of the fastening ring (6), said rib-like protrusions engaging around the rib-like protrusions (11) of the connection body (1).

3. Connection-body system according to Claim 2, **characterized in that** the spacing between rib-like protrusions (11) arranged in different planes of the connection body (1) corresponds to the height of the fastening ring (6).

## Revendications

1. Système à corps de raccordement dévolu à une robinetterie sanitaire encastrée, comportant un corps de raccordement (1) muni d'au moins un raccord (4) affecté à une conduite d'eau, et une bague de fixation (6),
a) ledit système à corps de raccordement incluant un dispositif réglable de fixation à l'aide duquel le corps de raccordement (1) peut être fixé à différentes profondeurs d'intégration, et qui comprend :
aa) la bague de fixation (6), pouvant être bloquée à demeure en différents emplacements sur ledit corps de raccordement (1) ;
ab) au moins un moyen d'arrêt (11 à 14), conçu pour arrêter ladite bague de fixation (6) sur ledit corps de raccordement (1) ;
sachant que
b) la bague de fixation (6) est fabriquée en un matériau doué de flexibilité élastique ;
c) ladite bague de fixation (6) peut être ouverte dans une zone de discontinuité, et peut être élargie élastiquement de façon telle qu'elle puisse être enfilée par le côté sur ledit corps de raccordement (1) ;
d) ladite bague de fixation (6) présente, au niveau de sa zone de discontinuité, deux régions extrêmes (7, 8) d'épaisseur réduite qui peuvent être guidées l'une sur l'autre et assujetties l'une à l'autre, en vue de la fermeture de ladite bague de fixation (6),
**caractérisé par le fait que**
e) chaque région extrême (7, 8) est munie d'un téton de fixation (15) et d'un trou (16), sachant que le téton de fixation (15) de l'une (7, 8) des régions extrêmes pénètre à chaque fois, à l'état fermé de la bague de fixation (6), dans le trou (16) de l'autre région extrême (8, 7).

2. Système à corps de raccordement selon la revendication 1, **caractérisé par le fait que** les moyens d'arrêt incluent plusieurs protubérances (11) du type nervure, situées dans des plans parallèles mutuellement distants sur le corps de raccordement (1), et plusieurs protubérances (13, 14) du type nervure, sur la surface de l'enveloppe intérieure de la bague de fixation (6), qui ceinturent lesdites protubérances (11) du type nervure du corps de robinetterie (1).

3. Système à corps de raccordement selon la revendication 2, **caractérisé par le fait que** la distance entre des protubérances (11) du type nervure du corps de raccordement (1), situées dans des plans différents, correspond à la hauteur de la bague de fixation (6).
